# EUROPÄISCHE PATENTSCHRIFT

(11) **EP 2 268 438 B1**
(45) Veröffentlichungstag und Bekanntmachung des Hinweises auf die Patenterteilung: **09.05.2012**
(21) Anmeldenummer: 09730305.1
(22) Anmeldetag: 21.03.2009
(51) Int. Cl.: B23C 5/20

(54) **KUGELBAHNFRÄSER UND SCHNEIDEINSATZ HIERFÜR**
BALL RACE MILL AND CUTTING INSERT FOR THE SAME
FRAISE POUR CHEMINS DE ROULEMENT À BILLES ET PLAQUETTE DE COUPE ASSOCIÉE

(30) Priorität: 11.04.2008 DE 102008019426
(43) Veröffentlichungstag der Anmeldung: 05.01.2011
(73) Patentinhaber: Hartmetall-Werkzeugfabrik Paul Horn GmbH, 72072 Tübingen (DE)
(72) Erfinder: LUIK, Matthias, 72766 Reutlingen (DE)
(74) Vertreter: Witte, Weller & Partner
(86) Internationale Anmeldenummer: PCT/EP2009/002106
(87) Internationale Veröffentlichungsnummer: WO 2009/124652

(56) Entgegenhaltungen:
- EP-A1- 0 542 150
- EP-A1- 1 736 266
- EP-A2- 1 224 992
- WO-A1-01/38029
- DE-B3-102008 016 732
- US-A1- 2007 071 559

## Beschreibung

Die vorliegende Erfindung betrifft einen Kugelbahnfräser sowie einen Schneideinsatz für einen Kugelbahnfräser gemäβ dem Oberbegriff des Anspruchs 1.

Ein solcher Kugelbahnfräser und eine solche Schneidplatte für einen Kugelbahnfräser sind aus der DE 199 56 592 A1 bekannt. Die darin beschriebene Schneidplatte weist eine obere Fläche, eine zu der oberen im Wesentlichen parallele untere Fläche und umlaufende Randflächen auf, die die obere und die untere Fläche miteinander verbinden, wobei Schneidkanten mindestens teilweise an den Schnittlinien zwischen Randflächen und der Oberfläche gebildet werden. Ferner weist die Schneidplatte eine im Wesentlichen in einer radialen Ebene laufende, stirnseitig anzuordnende Hauptschneide und eine überwiegend axial nach hinten und teilweise radial nach außen verlaufende Nebenschneide auf, mit einer in der Draufsicht auf die obere Fläche abgerundete Eckschneide am Übergang zwischen Hauptschneide und Nebenschneide mit einem ersten Radius, wobei die Nebenschneide einen zweiten Radius aufweist, der deutlich größer ist als der erste Radius der Eckschneide und der kleiner als das Zweifache des Fräserdurchmessers ist, für welchen die Schneidplatte vorgesehen ist. Dadurch soll es ermöglicht werden, Kugellaufbahnen für unterschiedliche Kugeldurchmesser mit ein und demselben Schneidplattentyp, wenn auch mit unterschiedlichen Fräsdurchmessern, herzustellen. Ferner soll es dadurch ermöglicht werden, eine Kugellaufbahn von mehreren Schneiden zu erzeugen, die sich an verschiedenen Schneidplatten befinden.

Weitere Kugelbahnfräser sind beispielsweise in der DE 199 45 360 A1 und der DE 10 2004 003147 A1 beschrieben.

Derartige Kugelbahnfräser werden beispielsweise dazu verwendet, Kugellaufbahnen an Naben für Gleichlaufgelenkwellen und dergleichen herzustellen. Dabei lassen sich grundsätzlich sowohl Kugellaufbahnen mit einem kreisförmigen Laufbahnquerschnitt als auch mit einem elliptischen oder gotischen Laufbahnquerschnitt fertigen. Zum Fräsen einer Kugellaufbahn wird der Kugelbahnfräser üblicherweise unter einem Anstellwinkel von etwa 20° zur Werkstückoberfläche der Gleichlaufgelenknabe angestellt, wobei grundsätzlich jedoch auch andere Lösungen existieren, die einen anderen Anstellwinkel (z.B. 90°) ermöglichen. Weitere allgemeine Details von Kugelbahnfräsem sowie deren grundsätzliche Funktion und Einsatzweise sind in den genannten Druckschriften näher beschrieben, insbesondere in der DE 199 56 592 A1, auf die hiermit Bezug genommen wird.

Bei der Herstellung von Kugellaufbahnen ist von großer Bedeutung, dass diese ein exaktes Maß und eine hohe Standzeit aufweisen. Bereits bei geringem Verschleiß des Schneideinsatzes ist die Maßhaltigkeit nicht mehr gewährleistet, so dass der Schneideinsatz dann komplett ersetzt werden muss. Die Standzeit bekannter Kugelbahnfräser bzw. bekannter Schneideinsätze ist relativ kurz.

Der Erfindung liegt deshalb die Aufgabe zugrunde, einen Kugelbahnfräser sowie einen Schneideinsatz für einen Kugelbahnfräser anzugeben, die insbesondere eine längere Standzeit aufweisen.

Diese Aufgabe wird erfindungsgemäß durch einen in Anspruch 1 angegebenen Schneideinsatz gelöst.

Die der Erfindung zugrundeliegende Aufgabe wird auf diese Weise jeweils vollkommen gelöst.

Der Erfindung liegt die Erkenntnis zugrunde, dass die erfindungsgemäß vorgeschlagene Ausgestaltung des Schneideinsatzes mit mindestens einer positiv vorauseilenden Spitze, auf die die Hauptschneide und die Nebenschneide hin zulaufen, es ermöglicht, insbesondere die Hauptschneide länger auszugestalten und somit eine bessere Kraftverteilung als die bekannten Schneideinsätze für Kugelbahnfräser zu gewährleisten. Jeder Punkt der Schneiden wird also im Einsatz mit einer geringeren Kraft beaufschlagt als die Schneiden bei den bekannten Kugelbahnfräsern, was letztlich zu einer geringeren Leistungsaufnahme und damit zu einer längeren Standzeit des Schneideinsatzes führt. Andererseits können mit dem erfindungsgemäßen Schneideinsatz aufgrund dieser besseren Verteilung der Kräfte entlang der Schneiden insgesamt höhere Kräfte aufgebracht werden, bei - verglichen mit bekannten Kugelbahnfräsern - dann ähnlicher Standzeit.

Der erfindungsgemäße Kugelbahnfräser führt somit aufgrund längerer Standzeiten zu einer Kostenreduzierung beim Anwender, da die Schneideinsätze seltener getauscht werden müssen, was auch weniger Stillstand der Werkzeugmaschine bedeutet. Ferner führt die bessere Kräfteverteilung auch zu einer Verringerung des im Einsatz entstehenden Lärms. Ferner lässt sich eine höhere Oberflächengüte erzielen.

Durch die Ausgestaltung des Sitzes im Halter mit wenigstens zwei Abstützflächen erfolgt erfindungsgemäß eine optimale Abstützung des Schneideinsatzes, der korrespondierende Anlageflächen aufweist. Der Schneideinsatz wird somit stets stabil von dem Sitz gehalten, und die im Einsatz entstehenden Kräfte werden vom Halter optimal aufgefangen. Insbesondere sind die Abstützflächen und die korrespondierenden Anlageflächen an dem Schneideinsatz so ausgestaltet und angeordnet, dass die im Einsatz entstehenden Kräfte in eine Richtung wirken, die den Schneideinsatz noch zusätzlich genau in den Sitz hineinpressen.

Ferner ist erfindungsgemäß vorgesehen, dass die zwischen den Schneidkanten und der Bodenfläche liegenden umlaufenden Randflächen, insbesondere alle umlaufenden Randflächen, eben sind. Dadurch wird eine optimale Druckverteilung im Sitz des Halters erreicht.

Bevorzugte Ausgestaltungen sind in den Unteransprüchen angegeben. In einer bevorzugten Ausgestaltung ist vorgesehen, dass die Spitzenkante, die die vorauseilende Spitze mit der Bodenfläche verbindet, abgerundet ist. Dadurch lässt sich ein Nutgrund in zu schneidenden Nuten besonders gut fräsen. Der Radius der Rundung der Spitzenkante soll dabei bevorzugt möglichst groß sein, wodurch die Stabilität und damit die Standzeit des Schneideinsatzes weiter erhöht werden.

In einer weiteren Ausgestaltung ist vorgesehen, dass die Spitze eine abgeflachte Schutzfase aufweist, die bevorzugt unter einem Schutzfasenwinkel schräg zur Bodenfläche verläuft, wobei der Schutzfasenwinkel vorzugsweise maximal 20°, insbesondere 2° bis 8°, beträgt und die Schutzfase zur Mitte des Schneideinsatzes hin geneigt ist. Eine solche Schutzfase, die bspw. die Form einer sichelförmigen Fläche einnimmt, dient als Schutz für die Spitze, die bei einer solchen Ausgestaltung nicht so leicht bricht, was wiederum einer Verlängerung der Standzeit dient.

Vorteilhafterweise ist der erfindungsgemäße Schneideinsatz als Wendeschneidplatte ausgestaltet und weist mindestens zwei, insbesondere drei, Paare von Schneidkanten mit jeweils einer Haupt- und einer Nebenschneide auf. Ferner sind bevorzugt an einem Kugelbahnfräser mindestens zwei, vorzugsweise drei (oder mehr), solcher Schneideinsätze an dessen Stirnseite verteilt angeordnet.

In einer praktischen Ausgestaltung eines erfindungsgemäßen Schneideinsatzes grenzen die Schneidkanten benachbarter Schneidkantenpaare in einem Tal aneinander und verlaufen unter einem Talwinkel im Bereich von 100° bis 160°, beispielsweise 130°, zueinander. Bei einer solchen Ausgestaltung hat sich eine optimale Kraftverteilung am Schneideinsatz ergeben.

Die Erfindung wird nachfolgend anhand von die Erfindung nicht einschränkende Ausführungsbeispiele zeigenden Zeichnungen näher erläutert. Es zeigen:
- Fig. 1: eine erste Ausführungsform eines erfindungsgemäßen Kugelbahnfräsers in verschiedenen Ansichten,
- Fig. 2: eine zweite Ausführungsform eines erfindungsgemäßen Kugelbahnfräsers in verschiedenen Ansichten und
- Fig. 3: einen erfindungsgemäßen Schneideinsatz in verschiedenen Ansichten.

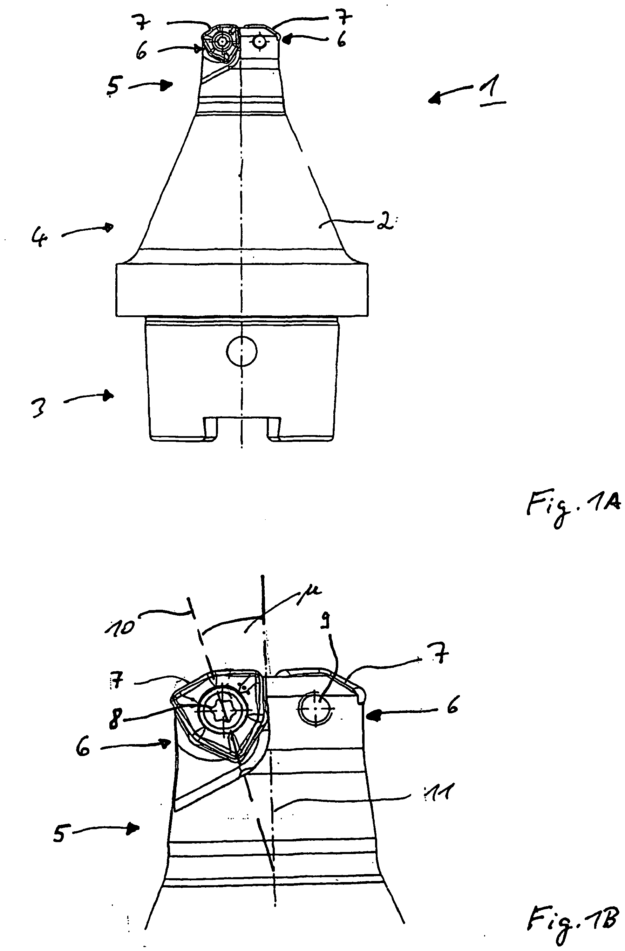

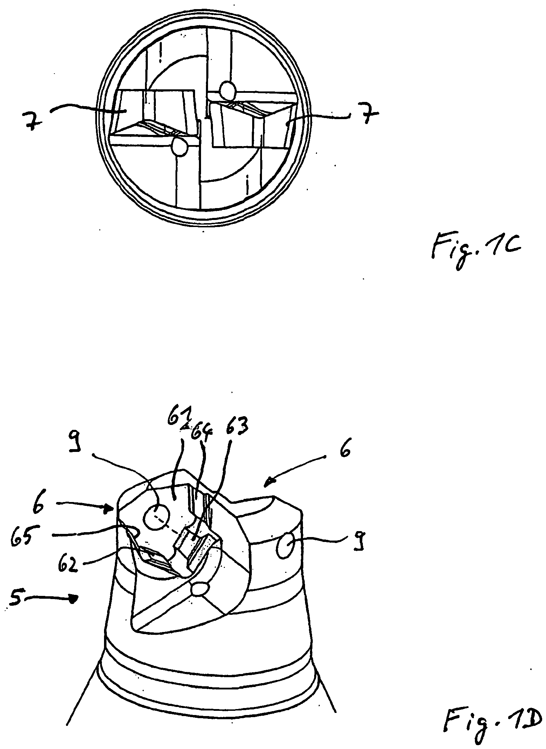

Fig. 1 zeigt eine erste Ausführungsform eines erfindungsgemäßen Kugelbahnfräsers, wobei Fig. 1A den Kugelbahnfräser in einer Frontansicht, Fig. 1B den Kopfbereich des Kugelbahnfräsers in vergrößerter Darstellung, Fig. 1C den Kopfbereich des Kugelbahnfräsers in einer Draufsicht und Fig. 1D den Kopfbereich des Kugelbahnfräsers ohne eingesetzte Schneideinsätze zeigen.

Der Kugelbahnfräser 1 weist einen Halter 2 auf, der in seinem Endbereich 3 zur Ankopplung an eine Werkzeugmaschine ausgestaltet ist. Im mittleren Bereich 4 verläuft der Halter 2 kegelstumpfförmig auf den Kopfbereich 5 zu, in dem zwei Sitze 6 für die Aufnahme von Schneideinsätzen 7 vorgesehen sind.

Die Schneideinsätze 7, die bei dieser Ausführungsform um 180° verdreht nebeneinander im Kopfende 5 des Halters 2 sitzen, sind mittels Festlegemitteln 8 im Sitz 6 gehalten, bspw. jeweils einer Schraube 8, die durch eine mittige Bohrung im Schneideinsatz 7 in eine im Kopfbereich 5 des Halters 2 vorgesehene Gewindebohrung 9 eingreift.

Der Sitz 6 in dem Halter 2 weist, wie insbesondere aus Fig. 1D zu erkennen ist, eine ebene Bodenfläche 61 und vier quer dazu verlaufende Abstützflächen 62, 63, 64 und 65 auf, die abgewinkelt zueinander verlaufen und zur Abstützung entsprechende Anlageflächen an dem Schneideinsatz 7 dienen. Der Schneideinsatz 7 stützt sich dabei zumindest an zwei, bevorzugt jedoch an allen vier dieser Abstützflächen 62, 63, 64 und 65 ab. Ferner ist bevorzugt, dass die Abstützflächen 62, 63, 64 und 65 ebenso wie die zugeordneten Anlageflächen an dem Schneideinsatz 7 eben ausgestaltet sind. Dabei ist insbesondere denkbar, dass die Abstützflächen 62, 63, 64 und 65 und/oder die zugeordneten Anlageflächen an dem Schneideinsatz 7 derartig ausgestaltet und angeordnet sind, dass keine flächige Anlage zwischen Anlagefläche und jeweils zugeordnete Abstützfläche vorliegt, sondern jeweils nur eine im Wesentlichen linienförmige Abstützung, was eine genauer definierte Position des Schneideinsatzes 7 in dem Sitz 6 zur Folge hat.

In der gezeigten Ausführungsform ist der Schneideinsatz 7 ferner derart in dem Sitz 6 positioniert, dass die Symmetrieachse 10 des Schneideinsatzes 7 unter einem vorgegebenen Stellwinkel µ zur Längsachse 11 des Halters 2 verläuft, wie insbesondere in Fig. 1b zu erkennen ist. Dieser Stellwinkel µ liegt zwischen 0 und 30°, in dem gezeigten Beispiel bei etwa 15°. Dadurch wird die Kraftrichtung in Richtung Haltermitte gesteuert und der Halter 2 kann dann an definierter Stelle im Bereich des Sitzes 6 stabil ausgeführt werden.

Durch die Variation des Stellwinkels µ kann ferner der Durchmesser der zu fräsenden Kugellaufbahn beeinflusst werden.

Wie insbesondere aus Fig. 1D ferner zu erkennen ist, sind die Abstützflächen 62-66 geringfügig kleiner als die korrespondierenden Anlageflächen an dem Schneideinsatz 7. Dadurch wird gewährleistet, dass die in Richtung der Abstützflächen 62-66 liegenden Schneidkante keinen Kontakt mit der benachbarten Abstützfläche hat, um Beschädigungen an der Schneidkante zu verhindern. Darüber hinaus weisen die Werkzeuge zum Herstellen des Halters fertigungsbedingt kleine Radien auf, weshalb muss der Schneideinsatz im unteren Bereich frei bleiben sollte, damit sie nicht gegen einen Auslaufradius drückt, da ansonsten eine genaue Positionierung nicht möglich wäre.

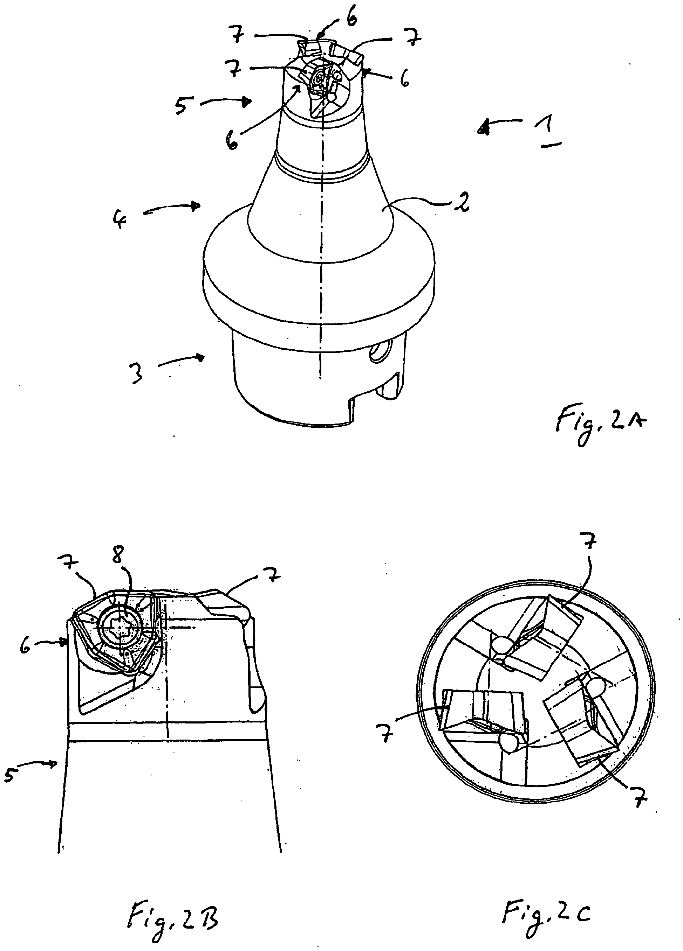

Fig. 2 zeigt eine zweite Ausführungsform eines erfindungsgemäßen Kugelbahnfräsers 1, wobei Fig. 2A eine perspektivische Vorderansicht, Fig. 2B eine vergrößerte Vorderansicht des Kopfbereichs und Fig. 2C eine Draufsicht auf das Kopfende zeigen. Im Unterschied zu der in Fig. 1 gezeigten ersten Ausführungsform des Kugelbahnfräsers 1 weist diese zweite Ausführungsform drei Sitze 6 im Kopfbereich 5 des Halters 2 auf, die jeweils um 120° verteilt, angeordnet sind. Diese Ausführungsform des Kugelbahnfräsers 1 dient somit zur Aufnahme von drei Schneideinsätzen 7, wie insbesondere aus Fig. 2C erkennbar ist.

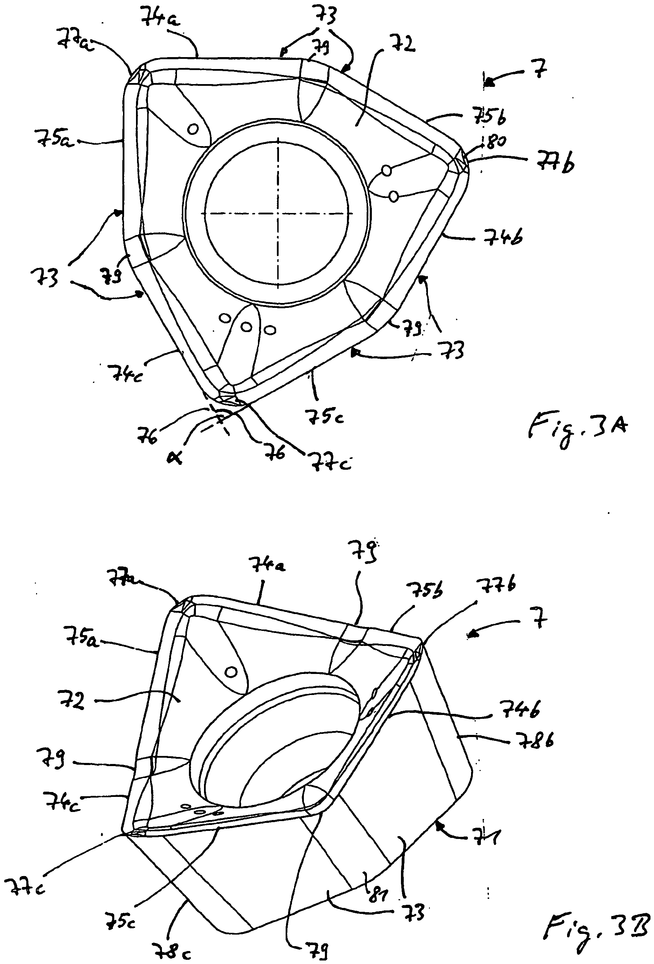

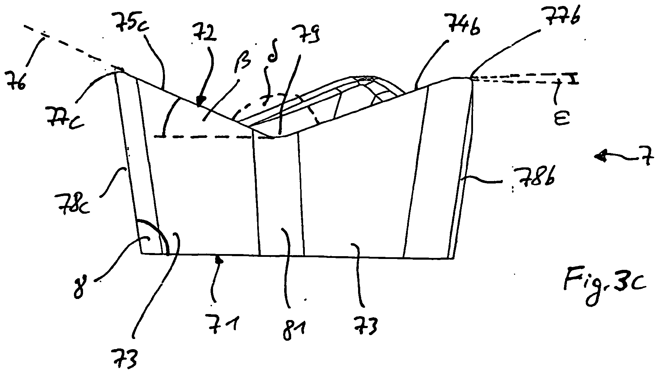

Fig. 3 zeigt eine Ausführungsform eines erfindungsgemäßen Schneideinsatzes 7, wobei Fig. 3A eine Draufsicht, Fig. 3B eine perspektivische Schrägansicht und Fig. 3C eine Seitenansicht zeigen. In dieser Ausführungsform ist der Schneideinsatz 7 als Wendeschneidplatte ausgestaltet mit einer ebenen Bodenfläche 71, einer der ebenen Bodenfläche 71 gegenüber liegenden Deckfläche 72 und umlaufenden Randflächen 73, die die Bodenfläche 71 und die Deckfläche 72 miteinander verbinden. An den Schnittlinien zwischen der Deckfläche 72 und den Randflächen 73 sind zumindest teilweise Schneidkanten vorgesehen, wobei bei der gezeigten Ausführungsform insgesamt sechs Schneidkanten vorgesehen sind, nämlich drei Paare (in Fig. 3 gekennzeichnet durch die Bezeichnung mit a, b, c) umfassend jeweils eine Hauptschneide 74 und eine Nebenschneide 75. Diese Schneiden 74, 75 verlaufen dabei entlang gerader Schneidkantenlinie 76, die sich im Bereich einer Spitze 77 unter einem Schneidkantenwinkel α schneiden. Dieser Schneidkantenwinkel α liegt vorzugsweise im Bereich zwischen 60° und 120°, beim vorliegenden Ausführungsbeispiel bei etwa 90°. Die Spitze 77, auf die hin eine Hauptschneide 74 und die benachbarte Nebenschneide 75 verlaufen, ist, wie insbesondere aus Fig. 3C zu erkennen ist, gegenüber der restlichen Deckfläche 72 positiv vorauseilend.

Die Schneidkantenlinien 76 verlaufen ferner schräg unter einem Anstiegswinkel β gegenüber der ebenen Bodenfläche 71, wobei der Anstiegswinkel β vorzugsweise im Bereich zwischen 10° und 80°, vorliegend etwa 30°, beträgt. Ferner verläuft die die Spitze 77 mit der Bodenfläche 71 verbindende Spitzenkante 78 jeweils unter einem stumpfen Spitzenkantenwinkel γ von mehr als 90° gegenüber der Bodenfläche 71, vorliegend etwa 110°.

Jede Schneidkante 74, 75 mündet von der an einem Ende befindlichen Spitze 77 am anderen Ende in ein Tal 79 aus, an das sich eine Schneidkante des benachbarten Schneidkantenpaares anschließt. Die in einem Tal 79 aneinander grenzenden benachbarten Schneidkanten, also bspw. - wie in Fig. 3C zu erkennen - die Hauptschneide 74b und die Nebenschneide 75c, verlaufen somit unter einem Talwinkel δ im Bereich von 100° bis 160°, in der gezeigten Ausführungsform von etwa 140°.

Wie insbesondere aus Fig. 3C zu erkennen ist, sind die Spitzen 77 bei dem gezeigten Ausführungsbeispiel abgeflacht und weisen eine Schutzfase auf. Diese Schutzfase verläuft nicht, wie die angrenzenden Schneiden 74, 75, entlang der Schneidkantenlinien 76, sondern unter einem Schutzfasenwinkel ε schräg zur Bodenfläche 71. Dieser Schutzfasenwinkel ε ist verhältnismäßig klein und beträgt maximal 20°. Insbesondere liegt der Schutzfasenwinkel ε im Bereich zwischen 2° und 8°, bspw. in etwa 5°. Diese Schutzfase dient dem Schutz der Spitze, so dass diese nicht so leicht abbricht, was zu einer Erhöhung der Standzeit des Schneideinsatzes 7 beiträgt. Die Schutzfase bildet, wie insbesondere Fig. 3A erkennen lässt, bevorzugt eine sichelförmige Fläche 80 auf.

Die Spitzenkanten 78 verlaufen ebenfalls nicht spitz zu und bilden eine scharfe Kante, sondern sind vorteilhafterweise abgerundet mit einem möglichst großen Radius. Auch dies trägt zur Stabilität und zum Schutz des Schneideinsatzes 7 bei.

Dies gilt ebenso für die Talkanten 81, die die Täler 79 mit der Bodenfläche 71 verbinden. Diese sind ebenfalls mit einem möglichst großen Radius abgerundet zur Erhöhung der Stabilität des Schneideinsatzes 7.

Insgesamt ist in dem in Fig. 3 gezeigten Ausführungsbeispiel der Schneideinsatz 7 somit als Wendeschneidplatte mit jeweils drei Hauptschneiden 74a-c und drei Nebenschneiden 75a-c ausgestaltet, die zwischen sich jeweils drei Spitzen 77 und drei Täler 79 bilden. Die die Schneidkanten 74, 75 mit der Bodenfläche 71 verbindenden Randflächen 73 haben neben ihrer Funktion als Freiflächen die Funktion von Anlageflächen und sind bevorzugt eben ausgestaltet. Bei in den Halter 2 montierter Position liegen mindestens zwei, bevorzugt benachbarte Randflächen wenigstens linienförmig an entsprechenden gegenüberliegenden Abstützflächen 62, 63, 64 des Sitzes 6 in dem Halter 2 an.

Die erfindungsgemäße Ausgestaltung des Schneideinsatzes und des Kugelbahnfräsers gewährleistet eine optimale Kraftverteilung im Einsatz entlang der im Einsatz befindlichen Schneiden. Dadurch wirken auf die einzelnen Punkte der im Einsatz befindlichen Schneiden weniger Kräfte als bei bekannten Kugelbahnfräsern, so dass die Standzeit länger ist als bei bekannten Kugelbahnfräsern. Es erfolgt dadurch auch eine geringere Leistungsaufnahme und es wird weniger Lärm erzeugt. Ferner wird der Schneideinsatz stabil in dem Halter gelagert und die im Einsatz erzeugten Kräften werden optimal von dem Halter aufgefangen.

Die Erfindung ist natürlich nicht auf die gezeigten Ausführungsformen beschränkt. Diverse Variationen sind möglich, insbesondere hinsichtlich der Anzahl und Anordnung der Schneidkanten, Randflächen und der diversen beschriebenen Winkel. Der Schneideinsatz muss auch nicht zwingend als Wendeschneidplatte ausgestaltet sein, sondern die Erfindung kann grundsätzlich auch bei einem Schneideinsatz eingesetzt werden, der ein einziges Schneidkantenpaar aufweist. Ferner können die Haupt- und Nebenschneiden eines Schneidkantenpaares identisch oder unterschiedlich ausgestaltet sein.

Ferner sei erwähnt, dass nicht alle Anlageflächen und auch nicht alle umlaufenden Randflächen an dem Schneideinsatz zwingend eben sein müssen. Eine ebene Ausgestaltung verringert jedoch den pro den Druck auf den Halter verringert. Auch die die Abstützflächen im Sitz müssen nicht zwingend eben sein. Eine ebene Ausgestaltung bringt jedoch ebenfalls Vorteile wegen besserer Druckverteilung und einfacherer Herstellbarkeit. Bevorzugt ist, dass die Abstützfläche ein Negativmodell der entsprechenden Anlagefläche der Schneideinsatzes ist und dass beide Flächen eben sind.

## Patentansprüche

1. Schneideinsatz (7) für Kugelbahnfräser (1) mit:
- einer ebenen Bodenfläche (71),
- einer der ebenen Bodenfläche gegenüber liegenden Deckfläche (72),
- umlaufenden Randflächen (73), die die Bodenfläche (71) und die Deckfläche (72) miteinander verbinden, und
- Schneidkanten (74, 75) mindestens teilweise an den Schnittlinien zwischen der Deckfläche (72) und den Randflächen (73), **dadurch gekennzeichnet, dass**
die Schneidkanten (74, 75) mindestens eine Hauptschneide (74) und eine Nebenschneide (75) aufweisen, die entlang gerader, sich in einer Spitze (77) unter einem Schneidkantenwinkel (α) im Bereich von 60° bis 120° schneidender Schneidkantenlinien (76) verlaufen, die unter einem Anstiegswinkel (β) im Bereich von 10° bis 80° zur Spitze (77) hin ansteigend gegenüber der Bodenfläche (71) verlaufen, wobei die die Spitze (77) mit der Bodenfläche (71) verbindende Spitzenkante (78) unter einem Spitzenkantenwinkel (γ) von mehr als 90° gegenüber der Bodenfläche (71) verläuft, und wobei die zwischen den Schneidkanten (74, 75) und der Bodenfläche (71) liegenden umlaufenden Randflächen (73) eben sind.

2. Schneideinsatz nach Anspruch 1, **dadurch gekennzeichnet, dass** die Spitzenkante (78) abgerundet ist.

3. Schneideinsatz nach einem der vorstehenden Ansprüche, **dadurch gekennzeichnet, dass** die Spitze (77) eine abgeflachte Schutzfase aufweist.

4. Schneideinsatz nach Anspruch 3, **dadurch gekennzeichnet, dass** die Schutzfase unter einem Schutzfasenwinkel (e) schräg zur Bodenfläche (71) verläuft.

5. Schneideinsatz nach Anspruch 4, **dadurch gekennzeichnet, dass** der Schutzfasenwinkel (ε) maximal 20°, insbesondere 2° bis 8° beträgt, und die Schutzfase zur Mitte des Schneideinsatzes (7) hin geneigt ist.

6. Schneideinsatz nach einem der vorstehenden Ansprüche, **dadurch gekennzeichnet, dass** der Schneideinsatz (7) als Wendeschneidplatte ausgestaltet ist und mindestens zwei, insbesondere drei, Paare von Schneidkanten (74, 75) mit jeweils einer Hauptschneide (74) und einer Nebenschneide (75) aufweist.

7. Schneideinsatz nach Anspruch 6, **dadurch gekennzeichnet, dass** die Schneidkanten (74, 75) benachbarter Schneidkantenpaare in einem Tal (79) aneinander grenzen und unter einem Talwinkel (δ) im Bereich von 100° bis 160° zueinander verlaufen.

8. Kugelbahnfräser (1) mit einem Schneideinsatz (7) nach einem der vorstehenden Ansprüche und einem Halter (2) mit einem Sitz (6) für einen solchen Schneideinsatz (7), wobei der Sitz (6) mindestens zwei, insbesondere vier, Abstützflächen (62, 63, 64) zur Abstützung entsprechender Anlageflächen (73) an dem Schneideinsatz (7) aufweist.

9. Kugelbahnfräser nach Anspruch 8, **dadurch gekennzeichnet, dass** mindestens zwei, insbesondere vier, Randflächen (73) als ebene Anlageflächen ausgebildet sind, die sich auf entsprechenden ebenen Abstützflächen (62, 63, 64) des Halters (2) abstützen.

## Claims

1. Cutting insert (7) for ball race mills (1) comprising:
- a flat base surface (71),
- a cover surface (72) opposite the flat base surface,
- circumferential edge surfaces (73) connecting the base surface (71) and the cover surface (72) to each other, and
- cutting edges (74, 75) at least partially on the lines of intersection between the cover surface (72) and the edge surfaces (73),
**characterized in that** the cutting edges (74, 75) comprise at least one main cutter (74) and a secondary cutter (75) extending along straight cutting edge lines (76) intersecting in a point (77) at a cutting edge angle (α) in the range from 60° to 120°, said lines extending upward at a rise angle (β) in the range from 10° to 80° toward the point (77) relative to the base surface (71), wherein the point edge (78) connecting the point (77) to the base surface (71) extends at a point edge angle (γ) of greater than 90° relative to the base surface (71), and wherein the circumferential edge surfaces (73) arranged between the cutting edges (74, 75) and the base surface (71) are flat.

2. Cutting insert according to claim 1, **characterized in that** the point edge (78) is rounded.

3. Cutting insert according to one of the preceding claims, **characterized in that** the point (77) comprises a flattened protection chamfer.

4. Cutting insert according to claim 3, **characterized in that** the protection chamfer extends at a protection chamfer angle (ε) inclined to the base surface (71).

5. Cutting insert according to claim 4, **characterized in that** the protection chamfer angle (ε) is at maximum 20°, in particular 2° to 8°, and the protection chamfer is inclined to the center of the cutting insert (7).

6. Cutting insert according to one of the preceding claims, **characterized in that** the cutting insert (7) is configured as indexable insert and comprises at least two, in particular three, pairs of cutting edges (74, 75) each having a main cutter (74) and a secondary cutter (75).

7. Cutting insert according to claim 6, **characterized in that** the cutting edges (74, 75) of neighboring pairs of cutting edges abut to each other in a valley (79) and extend at a valley angle (δ) in the range from 100° to 160° to each other.

8. Ball race mill (1) having a cutting insert (7) according to one of the preceding claims and a holder (2) having a seat (6) for such a cutting insert (7), wherein the seat (6) comprises at least two, in particular four, supporting surfaces (62, 63, 64) for supporting corresponding contact surfaces (73) at the cutting insert (7).

9. Ball race mill according to claim 8, **characterized in that** at least two, in particular four, edge surfaces (73) are formed as flat contact surfaces, that are supported on corresponding flat supporting surfaces (62, 63, 64) of the holder (2).

## Revendications

1. Insert de coupe (7) pour une fraise pour chemins de roulement à billes (1), avec
- une face de base plane (71),
- une face de couverture (72) opposée à la face de base plane,
- des faces latérales périphériques (73), qui relient l'une à l'autre la face de base (71) et la face de couverture (72), et
- des arêtes de coupe (74, 75) au moins en partie aux lignes d'intersection entre la face de couverture (72) et les faces latérales (73),
**caractérisé en ce que** les arêtes de coupe (74, 75) présentent au moins un tranchant principal (74) et un tranchant secondaire (75), qui s'étendent le long de lignes d'arêtes de coupe rectilignes (76) qui se coupent à une pointe (77) sous un angle d'arêtes de coupe (α) compris dans la plage de 60° à 120°, et qui s'étendent en montant vers la pointe (77) sous un angle de montée (β) compris dans la plage de 10° à 80° par rapport à la face de base (71), dans lequel l'arête de pointe (78) reliant la pointe (77) à la face de base (71) s'étend sous un angle d'arête de pointe (γ) de plus de 90° par rapport à la face de base (71), et dans lequel les faces latérales périphériques (73) situées entre les arêtes de coupe (74, 75) et la face de base (71) sont planes.

2. Insert de coupe selon la revendication 1, **caractérisé en ce que** l'arête de pointe (78) est arrondie.

3. Insert de coupe selon l'une quelconque des revendications précédentes, **caractérisé en ce que** la pointe (77) présente un chanfrein de protection aplati.

4. Insert de coupe selon la revendication 3, **caractérisé en ce que** le chanfrein de protection s'étend en oblique par rapport à la face de base (71) sous un angle de chanfrein de protection (ε).

5. Insert de coupe selon la revendication 4, **caractérisé en ce que** l'angle de chanfrein de protection (ε) vaut au maximum 20°, en particulier de 2° à 8°, et le chanfrein de protection est incliné vers le milieu de l'insert de coupe (7).

6. Insert de coupe selon l'une quelconque des revendications précédentes, **caractérisé en ce que** l'insert de coupe (7) est réalisé sous la forme d'une plaquette amovible et présente au moins deux, en particulier trois, paires d'arêtes de coupe (74, 75) comprenant chaque fois un tranchant principal (74) et un tranchant secondaire (75).

7. Insert de coupe selon la revendication 6, **caractérisé en ce que** les arêtes de coupe (74, 75) de paires d'arêtes de coupe voisines sont adjacentes l'une à l'autre dans une vallée (79) et sont inclinées l'une par rapport à l'autre d'un angle de vallée (δ) compris dans la plage de 100° à 160°.

8. Fraise pour chemins de roulement à billes (1) comportant un insert de coupe (7) selon l'une quelconque des revendications précédentes et un support (2) avec un siège (6) pour un tel insert de coupe (7), dans lequel le siège (6) présente au moins deux, en particulier quatre, faces d'appui (62, 63, 64) pour l'appui de faces d'application correspondantes (73) sur l'insert de coupe (7).

9. Fraise pour chemins de roulement à billes selon la revendication 8, **caractérisé en ce qu'**au moins deux, en particulier quatre, faces latérales (73) sont réalisées sous la forme de faces d'application planes, qui s'appuient sur des faces d'appui planes correspondantes (62, 63, 64) du support (2).
